# EUROPÄISCHE PATENTSCHRIFT

(11) **EP 0 581 995 B1**
(45) Veröffentlichungstag und Bekanntmachung des Hinweises auf die Patenterteilung: **15.01.1997**
(21) Anmeldenummer: 92113522.4
(22) Anmeldetag: 07.08.1992
(51) Int. Cl.: C22B 7/00

(54) **Wertstoffrückgewinnung**
Recovery of valuable materials
Récupération de matériaux de valeur

(43) Veröffentlichungstag der Anmeldung: 09.02.1994
(73) Patentinhaber: Arnotech Consulting AG, CH-6343 Rotkreuz (CH)
(72) Erfinder: Schweiger, Heribert, A-9601 Arnoldstein 206 (AT)
(74) Vertreter: Blum, Rudolf Emil Ernst

(56) Entgegenhaltungen:
- EP-A- 0 021 809
- EP-A- 0 158 627
- EP-A- 0 310 563
- US-A- 4 149 945
- US-A- 4 225 342

## Beschreibung

Die vorliegende Erfindung betrifft die Rückgewinnung von metallischen Wertstoffen aus Abfällen.

Heute fallen immer mehr Abfälle an, die Metalle in solchen Mengen enthalten, dass sie nicht problemlos endlagerfähig sind, die jedoch nach gängigen Verfahren nicht oder nur sehr schwer und kostenaufwendig entsorgt werden können.

Solche Stoffe werden heute mehrheitlich in Sondermülldeponien gelagert, wodurch sie eine bleibende Umweltbelastung resp. Umweltbedrohung darstellen sowie eine ungenutzte Quelle wertvoller Rohstoffe bilden.

Anlagen und Verfahren, die nur mässig konzentrierte Metalle aus bestimmten Ausgangsmaterialien gewinnen können sind bekannt. Beispielsweise gibt es ein Verfahren für die Zinkgewinnung, bei dem das Zink oxidiert, ins Sulfat übergeführt und elektrolytisch abgeschieden wird. Bei diesem bekannten Verfahren wird gewöhnlich von einem Zink-Konzentrat mit einem Zink-Gehalt von etwa 55 - 60 % Zink ausgegangen. Ferner stellen gewisse metallische Verunreinigungen Probleme bei der Elektrolyse dar.

Aus WO 92/02648 ist ein Verfahren zum Auftrennen von Auslaugrückständen in einen silber- und blei-haltigen Rückstand sowie in Zink-, Cadmium- und "Elektronik-Metall"-Sulfate bekannt.

US-A-4 149 945 beschreibt die Gewinnung von Kupfer und Zink aus Materialien, die diese in grösseren Mengen enthalten, unter gleichzeitiger Abtrennung von Eisen, Nickel und Kobalt.

Aufgabe der vorliegenden Erfindung ist es nun, ein Verfahren bereitzustellen, bei dem Abfallstoffe unterschiedlichster Zusammensetzungen, wie Trockenbatterien, Leuchtstoffröhren, Elektronik-Schrott, Galvanikabfälle, Filterrückstände, Bleiaschen, Stäube, Aschen und Krätzen aus sonstigen Schmelzprozessen, Flugaschen und -stäube aus Feuerungsanlagen, Glas und Altglas, Aktivkohle, sonstige Schlämme aus Fäll- und Löseprozessen mit produktionsspezifischen schädlichen Beimengungen, ferner Zinkschlamm, Bleischlamm und Akku-Säuren usw. unter Rückgewinnung von Wertstoffen wie Cu, Pb, Co, Ni, Cd, Hg, Au, Ag, Ge, Zn etc. umweltfreundlich entsorgt werden können.

Diese Aufgabe wird erfindungsgemäss durch das Verfahren gemäss Anspruch 1 gelöst. Bevorzugte Ausführungsformen sind in den abhängigen Ansprüchen definiert.

Die Abfallstoffe werden zuerst in einem thermischen Verfahren reduziert und verdampft, dann ins Oxid übergeführt, in Säure gelöst und mittels selektiver Fällungs- und Redoxreaktionen sowie durch Elektrolyse aufgetrennt.

Für eine nahezu quantitative Auflösung der Oxide sowie die Auftrennung der verschiedenen Metalle ist ein saures Ausgangsmedium notwendig.

Da die meisten Wertstoffe eine gute Löslichkeit in Form ihrer Sulfate haben, werden die Metalloxide bevorzugt in Schwefelsäure gelöst.

Um einen nahezu geschlossenen Säurekreislauf zu erhalten wird mit einem Leitelement gearbeitet. Als Leitelement eignet sich ein Metall, welches beispielsweise aufgrund seines elektrochemischen Potentials und/oder seiner Fällungseigenschaften als letztes aus dem Rückgewinnungsprozess hervorgeht.

Ein speziell geeignetes Metall ist Zink. Dieses bietet sich aufgrund seines tiefen elektrochemischen Potentials in Verbindung mit der Wasserstoffüberspannung an und ausserdem, weil beispielsweise in der Eisenhüttenindustrie eine grosse Menge zinkhaltiger Abfallstoffe anfallen,bei denen eine Zinkgewinnung oft nicht wirtschaftlich durchgeführt werden kann. Durch eine gleichzeitige Wertstoffrückgewinnung aus nur schwer entsorgbaren Abfällen kann die Zinkgewinnung aus solchen Stoffen wirtschaftlicher gestaltet werden. Bei dem erfindungsgemässen Verfahren reicht es ausserdem aus, wenn die Zinkkonzentration im Ausgangsmaterial 5 - 40 Gew. % beträgt.

Aufgrund der geringen Zinkkonzentration, die im Ausgangsmaterial vorhanden sein muss, eignen sich als weitere Ausgangsmaterialien auch minderwertige Zinkkonzentrate mit hohem SiO2-Gehalt oder mit niederem Zinkgehalt, welche für eine Zinkproduktion nach Stand der Technik nicht geeigent sind, sowie Rückstände aus der Nicht-Eisenmetall-Aufbereitung generell.

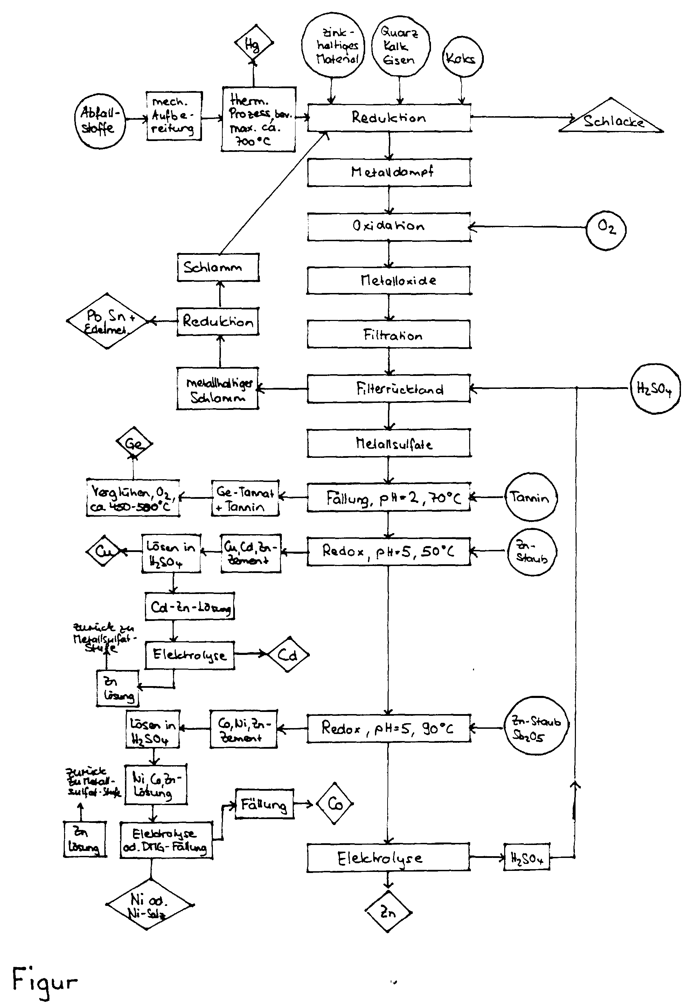

In der Folge soll das Verfahren mit Zink als Leitelement anhand der Figur näher erläutert werden.

Quecksilberbelastete Abfallstoffe wie Trokkenbatterien, Leuchtstoffröhren etc. werden vor dem eigentlichen Stoffumwandlungsprozess in einem thermischen Verfahren bei 600 bis 700°C entquickt. Die dabei entstehenden flüchtigen Verbindungen wie Ammoniumchlorid werden zusammen mit den Quecksilberdämpfen einer Nachverbrennung zugeführt, in der die organischen Verbindungen bei 1200°C verbrannt werden. Nach Kühlung der Abgase wird Quecksilber kondensiert, und in einer Nachwäsche werden die flüchtigen Salze wie beispielsweise Chloride ausgewaschen. Die Abgase werden über einen Aktivkohlefilter vom Restquecksilber gereinigt. Die so gereinigten Abgase werden den anderen Prozessabgasen zugeführt.

Die von Quecksilber und Chloriden befreiten Rückstände werden mit zinkhaltigem Material, z.B. aus der Eisenhüttenindustrie vermischt, um einen Zinküberschuss zu gewährleisten und beispielsweise mit Koks reduziert. Bei Endtemperaturen von ca. 1200°C werden die Metalle aus der Schlacke abgedampft und im Sauerstoffstrom oxidiert.

Für ein möglichst vollständiges Abdampfen der Metalle hat es sich als günstig erwiesen, wenn die Schlacke fliessfähig ist. Dies kann beispielsweise durch Zugabe von Quarz und/oder gegebenenfalls Silikaten, Kalk und Eisen geschehen, wobei diese Zusätze in Form von Abfällen zugesetzt werden können. Ein geeignetes kalkhaltiges Material ist z.B. der Rückstand aus der chemischen Stufe von Abwasserreinigungsanlagen in dem Kalk als Kalkhydrat vorliegt und als Silikate kann Glasbruch (Entsorgungsmaterial) als Schlackenbildner eingebracht werden.

Alle Elemente, die eine geringere O₂-Affinität als Zn haben, bzw. höhere Verdampfungstemperaturen, werden als Silikate in der Schlacke abgebunden. Die Schwefelgehalte der Schlacke hängen von ihrer Sulfidkapazität ab. Die Schlacke besteht hauptsächlich aus SiO₂, Fe, Phosphor, Zink, Blei, Calzium, Nickel, Mangan, Magnesium und Fluor.

Bei Betrieb der Reduktionsanlage bis zu Endtemperaturen von 1200°C hat sich eine Schlackenzusammensetzung mit 40% SiO2, 30% Ca und 10% Fe bewährt.

Eine Schlacke dieser Zusammensetzung verglast, wobei allenfalls zurückbleibende Metalle, wie Chrom, in unlöslicher Form vorliegen. Die Schlacke kann, in Form von Granulat, als Versatzstoff im Bergbau ihre Anwendung finden, ferner als Unterbaumaterial im Strassenbau.

Die Metalloxide werden auf Filtern aufgefangen und gegebenenfalls in Silos zwischengelagert. Darauf werden sie in Schwefelsäure gelöst. In dieser Stufe soll der pH-Wert maximal 2 betragen.

Besonders geeignet ist es mit einer sauren, nahezu gesättigten Zinksulfat-Lösung zu arbeiten, in welcher die anderen Metalle nur stark verdünnt vorliegen. Die maximale Konzentration liegt für Cu, Co, Ni, Ge etc. unter 200 mg/l. Zur Herstellung einer solchen Lösung wird bei pH-Werten unter 2, bevorzugt mit einer Schwefelsäurekonzentration von 150 g/l gearbeitet.

Bei diesen Bedingungen lösen sich Blei, Zinn sowie Silber, Gold und andere Edelmetalle nicht. Sie verbleiben im Schlamm und werden separat aufgearbeitet.

Dabei wird der Schlamm mit den oben angeführten Reduktionsmitteln bei ca. 1000°C reduziert. Das dabei anfallende elementare Blei ist ein "Sammler" für Edelmetalle. Die Blei- resp. Zinn-Blei-Legierungen können einer Bleihütte zur weiteren Aufarbeitung nach bekannten Verfahren übergeben werden.

Aus der Metallsulfatlösung werden nun die einzelnen Wertstoffe separiert. Dabei werden ihre chemischen, physikalischen und elektrochemischen Eigenschaften ausgenützt.

Es hat sich nun gezeigt, dass sich Germanium in einer sauren Lösung von ca. pH = 2 durch Zugabe von Tannin im Verhältnis ca. 1:20 (Ge:Tannin) bei einer Temperatur von ca. 70°C sehr selektiv fällen lässt. Das so gewonnene Germaniumtannat, welches mit bei pH ca. 2 ausgefallenem Tannin vermischt ist, wird bei 450-500°C in Gegenwart von Sauerstoff verglüht. Bei dieser Temperatur wird ein zu hoher Germaniumverlust infolge von Verdampfung vermieden. Es entsteht ein Germanium-Vormaterial, welches beispielsweise von Germanium-Produzenten nach gängigen Verfahren weiterverarbeitet werden kann.

Zur Gewinnung von Kupfer und Cadmium wird die Temperatur auf ca. 50°C gesenkt und der pH auf ca. 5 eingestellt. Durch Zusatz von Zinkstaub in geringem Ueberschuss werden Kupfer- und Cadmiumionen zu ihren Metallen reduziert, welche sich mit dem Ueberschuss an Zinkstaub vermengen.

Der so entstandene Cu, Cd, Zn-Zement wird mit Schwefelsäure von üblicherweise 5-10 g H₂SO₄/l versetzt, wobei Cd und Zn in Lösung gehen und Cu, gewöhnlich in Form von Kupferschwamm, zurückbleibt.

Cadmium wird aus der Cd/Zn-Lösung elektrolytisch gewonnen und die zinkhaltige Restlösung wird in den Kreislauf zurückgeführt, üblicherweise in die Lösungsstufe.

Cobalt und Nickel werden ebenfalls bei pH = 5 abgetrennt, wobei sich hier eine Temperatur von ca. 90°C als nützlich erwiesen hat. Ferner läuft die Reduktion der Cobalt- und Nickelionen mit Zinkstaub bevorzugt in Gegenwart von Antimon- oder Arsenoxid, wobei Antimonoxid u.a. aus toxischen Erwägungen der Vorzug zu geben ist. Antimonoxid ist nur in sehr geringen Mengen erforderlich. Ueblicherweise werden ca.40 mg/l eingesetzt.

Der so gewonnene Co, Ni, Zn-Zement wird in Schwefelsäure, 5-10 g H₂SO₄/l, gelöst, wobei das Antimonoxid als Feststoff zurückbleibt.

Nickel kann aus der Lösung entweder durch Fällung mit z.B. Dimethylglyoxim oder elektrolytisch gewonnen werden. Danach wird Cobalt als Salz [C₁₀ H₆ (NO) 0] CO₃ gefällt. Ueblicherweise wird eine 20%ige L-Nitroso - β-Naphtol-Lösung in geringem Ueberschuss verwendet.

Auch aus dieser Stufe kann die Restlösung in den Prozess zurückgeführt werden, bevorzugt in die Metallsulfat-Stufe.

Aus der nunmehr sehr reinen Zinksulfatlösung kann Zink elektrolytisch abgeschieden werden, wobei die Schwefelsäure regeneriert wird. Diese wird abermals zum Lösen der Metalloxide verwendet.

Für einen guten Prozessablauf ist es unerlässlich, dass das Verfahren überwacht wird. Dafür ist im Minimum eine Analyse der Ausgangsmaterialien notwendig und eine Analyse der Sulfatlösung sehr wünschenswert.

Vorzugsweise wird an den folgenden Punkten eine Elementbestimmung durchgeführt:
- beim Lösen der Metalloxide
- bei der Cu, Cd-Zementation
- bei der Co, Ni-Zementation
- vor und während der elektrolytischen Metall-Gewinnung.

Durch die geschlossene Kreislaufführung, wie sie in der Figur dargestellt ist, werden einerseits die Materialkosten minim gehalten, andererseits werden Metallspuren in den Kreislauf zurückgeführt und dadurch bis auf eine zurückgewinnbare Menge aufkonzentriert.

Durch geringfügige Modifikation kann das Verfahren auf die Rückgewinnung weiterer Wertstoffe angepasst werden, beispielsweise auf die im Elektronik-Schrott zusätzlich anwesenden Metalle Gallium und Thallium. Falls erwünscht, kann Thallium gemeinsam mit Cu und Cd zementiert, ins Sulfat übergeführt und selektiv als Chromat gefällt werden.

Bei schwefelhaltigen Ausgangsmaterialien ist es vorteilhaft, die schwefel- resp. Schwefeldioxid-haltigen Abgase über eien Gasreinigungsanlage zu führen, in der SO₂ mit Hilfe von Ethylenglykoldimethylether oder einer ZnO-Suspension (unter Umwandlung zu Zn SO₄) aufgefangen wird.

## Patentansprüche

1. Verfahren zur selektiven Gewinnung oder Rückgewinnung der Wertstoffe Ge, Cu, Cd, Ni, Co, Ga, Tl aus diese enthaltenden Abfallstoffen, wobei in einem geschlossenen Kreislauf
a) Abfallstoffe enthaltend Wertstoffe ausgewählt aus der Gruppe Ge, Cu, Cd, Ni, Co, Ga, Tl oder Mischungen derselben mit zinkhaltigem Material vermischt, unter Zusatz eines Reduktionsmittels reduziert und die zurückzugewinnenden Metalle verdampft werden,
b) der Metalldampf oxidiert wird, wobei Metalloxide entstehen,
c) die Metalloxide mit Schwefelsäure als Metallsulfate gelöst werden, wonach ein Schlamm abgetrennt wird, und
d) die Metalle in einem mehrstufigen Prozess aus ihrer zinkhaltigen Sulfatlösung mittels Redox- und/oder Fällungsreaktion abgetrennt werden und die Schwefelsäure schliesslich durch elektrolytische Abscheidung des Zinks regeneriert wird,
wobei die Konzentration der Wertstoffe in der Zink-Sulfatlösung < 200 mg/l beträgt.

2. Verfahren gemäss Anspruch 1, dadurch gekennzeichnet, dass als Abfallstoffe Trockenbatterien und/oder Leuchtstoffröhren, und/oder Elektronik-Schrott eingesetzt werden.

3. Verfahren gemäss Anspruch 1 oder 2, dadurch gekennzeichnet, dass das zinkhaltige Material zinkhaltiger Abfall aus der Eisenhüttenindustrie und/oder Galvanikabfall und/oder Rückstände aus der Nicht-Eisenmetall-Aufbereitung ist.

4. Verfahren gemäss einem der Ansprüche 1 bis 3, dadurch gekennzeichnet, dass die Reduktion mit Koks und/oder CO durchgeführt wird und dass die Schlacke gegebenenfalls durch Zumischung von Quarz und Kalk und gegebenenfalls Eisen fliessfähig gemacht wird.

5. Verfahren gemäss einem der Ansprüche 1 bis 4, dadurch g5ekennzeichnet, dass die Metalloxide in H₂SO₄ mit einem pH <2, bevorzugt einer Konzentration von 150 g H₂SO₄/l gelöst werden.

6. Verfahren gemäss einem der Ansprüche 1 bis 5, dadurch gekennzeichnet, dass der Sn, Pb, Ag, Au und andere Edelmetalle enthaltende Schlamm reduziert und dass durch Verdampfen von zinn- und edelmetallhaltigem Blei ein weiterverarbeitbares Vorprodukt gewonnen wird.

7. Verfahren nach einem der Ansprüche 1 bis 6, dadurch gekennzeichnet, dass Germanium bei pH = 2, 70°C mit Tannin aus der zinkhaltigen Lösung gefällt und durch Verglühen, bevorzugt bei 450-500°C, ein Germanium-Vorprodukt gewonnen wird, dass Cu und Cd bei pH = 5 und 50°C durch Reduktion mit Zinkstaub aus der zinkhaltigen Lösung abgeschieden, mit H₂SO₄, bevorzugt 5-10 g/l das Cd selektiv gelöst und schliesslich elektrolytisch gewonnen wird, dass bei pH = 5 und 90°C Co und Ni durch Reduktion mit Zinkstaub, bevorzugt in Gegenwart von Sb₂O₅ abgeschieden, in H₂SO₄, bevorzugt 5-10 g/l, gelöst und Nickel elektrolytisch oder durch Dimethylglyoximfällung gewonnen wird, worauf Co durch Salzfällung mit L-Nitroso-β-Naphtol (C₁₀ H₆ (NO) OH, bevorzugt als 20%-ige Lösung im Ueberschuss isoliert wird, und dass Zink aus der nahezu reinen Zinksulfatlösung unter Rückgewinnung der Schwefelsäure elektrolytisch abgeschieden wird.

8. Verfahren gemäss einem der Ansprüche 1 bis 7, dadurch gekennzeichnet, dass die Abfallstoffe zuerst mechanisch aufbereitet und anschliessend einem thermischen Prozess, bevorzugt bei bis zu 700°C unterzogen werden, wobei allenfalls vorhandenes Quecksilber als Metalldampf entfernt und mittels Kondensation abgeschieden wird.

## Claims

1. Method for the selective extraction or recovery of the valuable materials germanium, copper, cadmium, nickel, cobalt, gallium, and tantalum from waste materials containing them wherein, in a closed cycle:
(a) waste material containing valuable material selected from the group germanium, copper, cadmium, nickel, cobalt, gallium and tantalum or mixtures thereof are mixed with zinc-bearing material, are reduced with the aid of a reducing means and the recovered material is vaporized,
(b) the metal vapour is oxidized whereby metal oxide is produced,
(c) the metal oxide is dissolved as metal sulphate by means of sulphuric acid, after which a sludge is removed, and
(d) the metal is separated in a multistage process from its zinc-bearing sulphate solution by means of a redox or precipitation reaction and the sulphuric acid is eventually regenerated by electrolytic separation of the zinc,
the concentration of the valuable material in the zinc-sulphate solution amounting to less than 200 mg/litre.

2. Method according to claim 1 characterised in that dry batteries and/or fluorescent tubes and/or electronic scrap are used as the waste material.

3. Method according to claim 1 or 2, characterised in that the material containing zinc is zinc-laden waste from the iron-working industry and/or galvanised waste and/or residue from non-ferrous metal processing.

4. Method according to any of claims 1 to 3, characterised in that the reduction is performed with coke and or carbon monoxide and that the slag is made flowable as appropriate through additive mixture of quartz and lime and as appropriate iron.

5. Method according to any of claims 1 to 4, characterised in that the metallic oxide is dissolved in sulphuric acid with a pH less than 2, preferably at a concentration of 150 grams of sulphuric acid per litre.

6. Method according to any of claims 1 to 5, characterized in that the sludge containing tin, lead, silver, gold and other noble metals is reduced and through vaporization of lead containing pewter and noble metal a further workable precursor is obtained.

7. Method according to any of claims 1 to 6, characterized in that germanium is precipitated at pH equal to 2 and 70°C with tannin from the zinc-bearing solution and through firing, preferably at 450 - 500°C, a germanium - precursor is extracted, copper and cadmium are separated at pH equal to 5 and 50°C through reduction with zinc dust is separated from the zinc-bearing solution, the cadmium is selectively dissolved with suphuric acid, preferably 5 - 10 grams/litre, and eventually electrolytically recovered, cobalt and nickel are separated at pH equal to 5 and 90°C by reduction with zinc powder, preferably in the presence of antimony oxide, are dissoved in sulphuric acid, preferably 5-10 grams/litre, and nickel is recovered electrolytically or through dimethylglyoxime precipitation from which cobalt is isolated by way of salt precipitatation with L-nitroso-β-napthol [C₁₀ H₆ (NO) OH], preferably at about a 20% excess solution, and zinc is electrolytically separated from the practically clean zinc sulphate solution with recovery of the sulphuric acid.

8. Method according to any of claims 1 to 7 characterised in that the waste material is first mechanically processed and thereafter is subjected to a thermal process, preferably up to 700°C whereby any mercury escapes as a metal vapour and is recovered by condensation.

## Revendications

1. Procédé de production sélective ou de récupération des matériaux de valeur Ge, Cu, Cd, Ni, Co, Ga, Tl à partir de déchets contenant ces matériaux, dans lequel, dans un circuit fermé,
a) des déchets contenant des matériaux de valeur sélectionnés parmi le groupe de Ge, Cu, Cd, Ni, Co, Ga, Tl ou des mélanges de ceux-ci sont mélangés à une matière contenant du zinc, et sont réduits par addition d'un réducteur, les métaux à récupérer étant évaporés,
b) la vapeur métallique est oxydée, des oxydes métalliques étant formés,
c) les oxydes métalliques sont dissous avec de l'acide sulfurique sous la forme de sulfates métalliques, après quoi une boue est isolée, et
d) les métaux sont, dans un processus en plusieurs étapes, isolés de leur solution de sulfate contenant du zinc au moyen d'une réaction d'oxydoréduction et/ou de précipitation et l'acide sulfurique est enfin régénéré par séparation électrolytique du zinc,
la concentration des matériaux de valeur dans la solution de sulfate de zinc étant inférieure à 200 mg/l.

2. Procédé suivant la revendication 1, caractérisé en ce que, comme déchets, on met en oeuvre des batteries sèches et/ou des tubes fluorescents, et/ou des rebuts d'électronique.

3. Procédé suivant l'une des revendications 1 et 2, caractérisé en ce que la matière contenant du zinc est un déchet contenant du zinc provenant de l'industrie sidérurgie et/ou un déchet de galvanisation et/ou des résidus issus du traitement de métal non ferreux.

4. Procédé suivant l'une des revendications 1 à 3, caractérisé en ce que la réduction est effectuée avec du coke et/ou du CO et en ce que la scorie est rendue capable de s'écouler éventuellement par addition de quartz et de chaux et éventuellement de fer.

5. Procédé suivant l'une des revendications 1 à 4, caractérisé en ce que les oxydes métalliques sont dissous dans H₂SO₄ à un pH <2, de préférence à une concentration de 150 g de H₂SO4/l.

6. Procédé suivant l'une des revendications 1 à 5, caractérisé en ce que la boue contenant du Sn, Pb, Ag, Au et d'autres métaux nobles est réduite et en ce qu'un produit brut qui peut être traité ultérieurement est produit par évaporation de plomb contenant de l'étain et du métal noble.

7. Procédé suivant l'une des revendications 1 à 6, caractérisé en ce que du germanium est précipité dans la solution contenant du zinc avec du tannin à un pH = 2, à 70°C, et en ce qu'un produit brut de germanium est produit par combustion sans flamme, de préférence à 450-5000C, en ce que Cu et Cd sont séparés de la solution contenant du zinc à un pH = 5 et à 50°C par réduction avec de la poussière de zinc, le Cd étant dissous de manière sélective avec du H₂SO₄, de préférence à 5-10 g/l, et étant enfin extrait par voie électrolytique, en ce qu'à un pH = 5 et à 90°C Co et Ni sont séparés par réduction avec de la poussière de zinc, de préférence en présence de Sb₂O₅, et sont dissous dans H₂SO₄, de préférence à 5-10 g/l, du nickel étant produit par voie électrolytique ou par précipitation au diméthylglyoxime, après quoi Co est isolé par précipitation saline avec du L-nitroso-β-nahtol [C₁₀ H₆ (NO) OH], de préférence sous la forme d'une solution à 20 % en excès, et en ce que du zinc est séparé par voie électrolytique à partir de la solution de sulfate de zinc presque pur avec récupération de l'acide sulfurique.

8. Procédé suivant l'une des revendications 1 à 7, caractérisé en ce que les déchets sont tout d'abord traités par voie mécanique et ensuite sont soumis à un processus thermique, de préférence allant jusqu'à 700°C, le mercure à la rigueur présent étant éliminé sous la forme d'une vapeur métallique et étant séparé au moyen d'une condensation.
